# EUROPEAN PATENT APPLICATION

(11) **EP 4 654 085 A1**
(43) Date of publication of application: **26.11.2025**
(21) Application number: 24219583.2
(22) Date of filing: 12.12.2024
(51) Int. Cl.: G06N 3/082, G06N 3/063, G06N 3/0495, G06N 3/0985

(54) **DYNAMIC REPROVISIONING OF MACHINE LEARNING MODEL LAYERS**

(30) Priority: 22.05.2024 US 202418671984
(71) Applicant: Red Hat, Inc., Raleigh, NC 27601 (US)
(72) Inventor: GRIFFIN, Leigh, Raleigh, 27601 (US); SARIDAKIS, Dimitri, Raleigh, 27601 (US)
(74) Representative: Murgitroyd & Company

(57) **Abstract**

Techniques for dynamically reprovisioning layers of a machine learning (ML) model are disclosed. For a machine learning (ML) model comprising a set of layers, current benchmark information for each layer of the set of layers and a set of predefined operating thresholds corresponding to hardware on which the ML model is executing may be determined. Context information regarding the hardware on which the ML model is executing may be obtained. Using an automation controller, one or more layers of the set of layers that must be modified to prevent performance degradation of the ML model may be identified based on the current benchmark information for each layer of the set of layers, the set of predefined operating thresholds and the context information. The automation controller may modify each of the one or more layers.

## Description

### TECHNICAL FIELD

Aspects of the present disclosure relate to machine learning models, and specifically to reprovisioning layers of a machine learning model using an automation controller.

### BACKGROUND

Machine learning (ML) models are often deployed on computing devices to perform/automate a number of different functions. A ML model may be trained to perform a function(s) using training data and then the trained ML model may be used to make predictions on new data. The process of training a ML model can be seen as a learning process where the ML model is exposed to new,e unfamiliar data step by step. At each step, the ML model makes predictions and gets feedback about how accurate its generated predictions were. Once trained, the ML model can be deployed to perform the function it was trained to perform.

Automation controllers are suites of software tools that can be used to automate a variety of operations related to computing resources, including configuration management, application deployment, cloud provisioning, task execution, network automation, and multi-node orchestration. In the past, such operations would generally be performed by a human operator that logs into a computing system to manually perform tasks. As computing infrastructure increases in size and complexity, the manual performance of these tasks may become time consuming and error prone. The automation provided by automation controllers can be used to orchestrate changes over thousands of devices while reducing the level of human involvement in provisioning, installing, configuring, and maintaining computing resources. One example of such an automation controller is the Red Hat^{™} Ansible^{™} Automation Platform.

### SUMMARY

According to a first aspect of the disclosure, there is provided a method comprising: determining, for a machine learning (ML) model comprising a set of layers, current benchmark information for each layer of the set of layers and a set of predefined operating thresholds corresponding to hardware on which the ML model is executing; obtaining context information regarding the hardware on which the ML model is executing; identifying, by a processing device using an automation controller, one or more layers of the set of layers that must be modified to prevent performance degradation of the ML model based on the current benchmark information for each layer of the set of layers, the set of predefined operating thresholds and the context information; and modifying, by the automation controller, each of the one or more layers.

The context information may comprise: processing tasks currently assigned to the ML model; a current status of the hardware; and an ideal status of the hardware for optimal execution of the ML model. The automation controller may comprise a set of rules associated with the hardware on which the ML model is executing, and modifying each of the one or more layers may comprise: modifying the layer based on the set of rules so that the layer does not exceed any of the predefined operating thresholds; or modifying the layer based on the set of rules so that the current status of the hardware on which the ML model is executing is within a threshold of the ideal status of the hardware for optimal execution of the ML model.

Modifying a layer of the one or more layers may comprise one or more of: expanding or reducing a size of the layer; tuning a weighting of the layer; or modifying an activation function of the layer. Reducing the size of the layer may comprise one or more of: removing one or more attention modules of the layer; removing an attention head of each of the one or more attention modules of the layer; or modifying a bit precision of data operated on by the layer. The method may further comprise removing the layer from the ML model; and deploying the layer back to the ML model after the layer has been modified.

The current benchmark information for each layer of the set of layers may comprise: a maximum layer size; and a maximum usage of the processing device.

According to a second aspect of the disclosure, there is provided a system comprising a memory, and a processing device operatively coupled to the memory, the processing device configured to: determine, for a machine learning (ML) model comprising a set of layers, current benchmark information for each layer of the set of layers and a set of predefined operating thresholds corresponding to hardware on which the ML model is executing; obtain context information regarding the hardware on which the ML model is executing; identify, using an automation controller, one or more layers of the set of layers that must be modified to prevent performance degradation of the ML model based on the current benchmark information for each layer of the set of layers, the set of predefined operating thresholds and the context information; and modify, by the automation controller, each of the one or more layers.

The context information may comprise: processing tasks currently assigned to the ML model; a current status of the hardware; and an ideal status of the hardware for optimal execution of the ML model. The automation controller may comprise a set of rules associated with the hardware on which the ML model is executing, and the processing device may be configured to modify each of the one or more layers by: modifying the layer based on the set of rules so that the layer does not exceed any of the predefined operating thresholds; or modifying the layer based on the set of rules so that the current status of the hardware on which the ML model is executing is within a threshold of the ideal status of the hardware for optimal execution of the ML model.

The processing device may be configured to modify a layer of the one or more layers by performing one or more of: expanding or reducing a size of the layer; tuning a weighting of the layer; or modifying an activation function of the layer. To reduce the size of the layer, the processing device may be configured to perform one or more of: removing one or more attention modules of the layer; removing an attention head of each of the one or more attention modules of the layer; or modifying a bit precision of data operated on by the layer. The processing device may be further configured to: remove the layer from the ML model; and deploy the layer back to the ML model after the layer has been modified.

The current benchmark information for each layer of the set of layers may comprise: a maximum layer size; and a maximum usage of the processing device.

According to a third aspect of the disclosure, there is provided a non-transitory computer-readable medium having instructions stored thereon which, when executed by a processing device, cause the processing device to carry out the method steps of the first aspect. The processing device may be caused to: determine, for a machine learning (ML) model comprising a set of layers, current benchmark information for each layer of the set of layers and a set of predefined operating thresholds corresponding to hardware on which the ML model is executing; obtain context information regarding the hardware on which the ML model is executing; identify, by a processing device using an automation controller, one or more layers of the set of layers that must be modified to prevent performance degradation of the ML model based on the current benchmark information for each layer of the set of layers, the set of predefined operating thresholds and the context information; and modify, by the automation controller, each of the one or more layers.

The context information may comprise: processing tasks currently assigned to the ML model; a current status of the hardware; and an ideal status of the hardware for optimal execution of the ML model. The automation controller may comprise a set of rules associated with the hardware on which the ML model is executing, and the instructions may cause the processing device to modify each of the one or more layers by: modifying the layer based on the set of rules so that the layer does not exceed any of the predefined operating thresholds; or modifying the layer based on the set of rules so that the current status of the hardware on which the ML model is executing is within a threshold of the ideal status of the hardware for optimal execution of the ML model.

The instructions may cause the processing device to modify each of the one or more layers by one or more of: expanding or reducing a size of the layer; tuning a weighting of the layer; or modifying an activation function of the layer. The instructions may cause the processing device to reducing the size of the layer by one or more of: removing one or more attention modules of the layer; removing an attention head of each of the one or more attention modules of the layer; or modifying a bit precision of data operated on by the layer. The instructions may further cause the processing device to: remove the layer from the ML model; and deploy the layer back to the ML model after the layer has been modified.

The current benchmark information for each layer of the set of layers may comprise: a maximum layer size; and a maximum usage of the processing device.

### BRIEF DESCRIPTION OF THE DRAWINGS

The described embodiments and the advantages thereof may best be understood by reference to the following description taken in conjunction with the accompanying drawings. These drawings in no way limit any changes in form and detail that may be made to the described embodiments by one skilled in the art without departing from the spirit and scope of the described embodiments.
FIG. 1 is a block diagram that illustrates an example system, in accordance with some embodiments of the present disclosure.
FIG. 2 is a block diagram illustrating a computing device from the example system of FIG. 1 executing an ML model and obtaining benchmark and context information to determine which layers of the ML model should be reprovisioned, in accordance with some embodiments of the present disclosure.
FIG. 3 is a block diagram illustrating the computing device of FIG. 2 in the process of modifying a layer of the ML model should be reprovisioned, in accordance with some embodiments of the present disclosure.
FIG. 4 is a flow diagram of a method for dynamically reprovisioning layers of an ML model, in accordance with some embodiments of the present disclosure.
FIG. 5 is a block diagram of an example computing device that may perform one or more of the operations described herein, in accordance with some embodiments of the present disclosure.

### DETAILED DESCRIPTION

ML models often experience rapid growth in terms of complexity and size as they evolve and learn through repeated interactions. This is especially true for certain types of ML models such as large language models (LLMs). At the same time, ML models are not only being deployed on devices with massive available computing resources (e.g., super computers), but are also being deployed on everyday computing devices that have relatively much fewer such as desktop and laptop computers, mobile devices (e.g., smart phones), and IoT devices, among others. This creates challenges with respect to efficiency and resource utilization, with inefficient resource utilization resulting in suboptimal performance of an ML model and, in cases involving resource constrained environments (e.g., IoT), preventing deployment of the ML model altogether.

The present disclosure addresses the above-noted and other deficiencies by providing techniques for dynamically reprovisioning layers of a machine learning (ML) model using an automation controller. For a machine learning (ML) model comprising a set of layers, the automation controller may obtain current benchmark information for each layer of the set of layers and a set of predefined operating thresholds corresponding to hardware on which the ML model is executing. The automation controller may also obtain context information regarding the hardware on which the ML model is executing. The automation controller may identify one or more layers of the set of layers that must be modified to prevent performance degradation of the ML model based on the current benchmark information for each layer of the set of layers, the set of predefined operating thresholds and the context information. The automation controller may modify each of the one or more layers based on a set of rules. In some embodiments, the set of rules may be implemented using a playbook deployed by the automation controller.

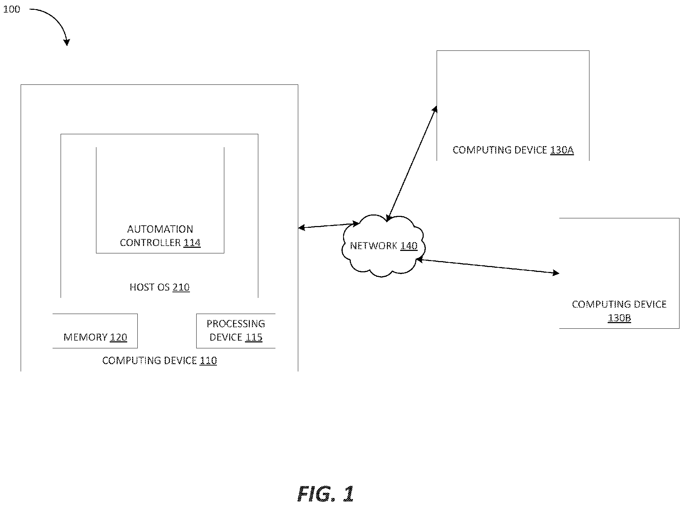

FIG. 1 is a block diagram that illustrates an example system 100. As illustrated in FIG. 1, the system 100 includes a computing device 110, and a plurality of computing devices 130. The computing devices 110 and 130 may be coupled to each other (e.g., may be operatively coupled, communicatively coupled, may communicate data/messages with each other) via network 140. Network 140 may be a public network (e.g., the internet), a private network (e.g., a local area network (LAN) or wide area network (WAN)), or a combination thereof. In one embodiment, network 140 may include a wired or a wireless infrastructure, which may be provided by one or more wireless communications systems, such as a WiFiTM hotspot connected with the network 140 and/or a wireless carrier system that can be implemented using various data processing equipment, communication towers (e.g., cell towers), etc. In some embodiments, the network 140 may be an L3 network. The network 140 may carry communications (e.g., data, message, packets, frames, etc.) between computing device 110 and computing devices 130. Each computing device may include hardware such as processing device 115 (e.g., processors, central processing units (CPUs), memory 120 (e.g., random access memory (RAM), storage devices (e.g., hard-disk drive (HDD), solid-state drive (SSD), etc.)), and other hardware devices (e.g., sound card, video card, etc.). In some embodiments, memory 120 may be a persistent storage that is capable of storing data. A persistent storage may be a local storage unit or a remote storage unit. Persistent storage may be a magnetic storage unit, optical storage unit, solid state storage unit, electronic storage units (main memory), or similar storage unit. Persistent storage may also be a monolithic/single device or a distributed set of devices. Memory 120 may be configured for long-term storage of data and may retain data between power on/off cycles of the computing device 110. Each computing device may comprise any suitable type of computing device or machine that has a programmable processor including, for example, server computers, desktop computers, laptop computers, tablet computers, smartphones, set-top boxes, etc. In some examples, each of the computing devices 110 and 130 may comprise a single machine or may include multiple interconnected machines (e.g., multiple servers configured in a cluster). The computing devices 110 and 130 may be implemented by a common entity/organization or may be implemented by different entities/organizations. For example, computing device 110 may be operated by a first company/corporation and one or more computing devices 130 may be operated by a second company/corporation. Each of computing device 110 and computing devices 130 may execute or include an operating system (OS) such as host OS 210 of computing device 110, as discussed in more detail below. The host OS of a computing device may manage the execution of other components (e.g., software, applications, etc.) and/or may manage access to the hardware (e.g., processors, memory, storage devices etc.) of the computing device.

In some embodiments, the system 100 may be configured as a scalable, distributed computing system, such as a container orchestration platform. A container orchestration platform is a platform for developing and running containerized applications and may allow applications and the data centers that support them to expand from just a few machines and applications to thousands of machines that serve millions of clients. Container orchestration platforms may provide an image-based deployment module for creating containers and may store one or more image files for creating container instances. In some embodiments, the computing device 110 may implement a control plane of a container orchestration platform while computing devices 130 may each implement a compute node of the container orchestration platform. Many application instances can be running in containers on a single host without visibility into each other's processes, files, network, and so on. Each container may provide a single function (often called a "service") or component of an application, such as a web server or a database, though containers can be used for arbitrary workloads. The container orchestration platform may scale a service in response to workloads by instantiating additional containers with service instances in response to an increase in the size of a workload being processed by the nodes. One example of a container orchestration platform in accordance with some embodiments is the Red HatTM OpenShiftTM platform built around Kubemetes.

The computing devices 130 may be edge devices such as assembly line tools, IoT gateways, points of sale, and industrial controllers that have to operate with limited computing resources, power, cooling, and connectivity. They can also be hard to access, or in settings with little or no on-site technical expertise. In some embodiments, the computing devices 130 may form a domain. A domain may include of a group of devices that share the same configuration, policies, and identity stores. The shared properties allow the devices within the domain to be aware of each other and operate together. The computing devices 130 may all be individual devices that are a part of a domain representing e.g., a fleet of internet of things (IoT) devices.

The computing device 110 may include an automation controller 114 which may comprise an automation tool such as Red Hat AnsibleTM, which is an open-source automation tool that allows users to automate the configuration, management, and deployment of systems and applications such as a cluster of worker nodes. The automation controller 114 may allow users to define their infrastructure as code using e.g., Yet Another Markup Language (YAML), which is a declarative language. The automation controller 114 may use a client-server architecture, where a central machine, known e.g., as the control node (computing device 110 in the example of FIG. 1), manages and orchestrates the automation process. The control node connects to target nodes (computing devices 130 in the example of FIG. 1) over Secure Shell protocol (SSH) or other protocols and executes tasks that are included in "playbooks." A playbook may define a set of tasks and configurations to be executed on remote systems. A playbook includes one or more plays, and each play includes a set of tasks. Plays are a collection of tasks that are executed together on a group of hosts or a set of hosts defined by patterns. Tasks within a playbook define actions to be performed on the target devices, such as installing packages, copying files, starting, or stopping services, executing commands, configuring network settings, etc. Although discussed herein as an automation tool, the automation controller 114 could also be implemented as an infrastructure as code (IaC) tool such as Terraform or Otter, for example.

The automation controller 114 may be coupled to a database of automation data (not shown) that can be used to create a playbook. For example, the automation data may include an inventory of target nodes, scripts and/or code modules to be executed on the target nodes, and other information. The playbook may be initiated manually by the user or in accordance with a schedule defined by the user. The playbook may be configured to perform any of a variety of automated tasks, such as executing software updates (e.g., patches), implementing configuration changes, provisioning cloud resources, and modifying layers of a machine learning model based on a set of rules, as discussed in further detail herein.

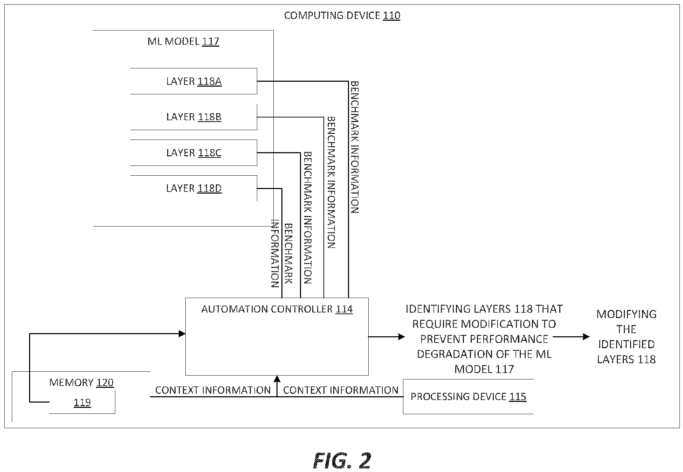

FIG. 2 illustrates the system 100 in accordance with some embodiments of the present disclosure, where the computing device 110 obtains benchmark and context information to determine which layers of an ML model should be reprovisioned, as discussed in further detail herein. An ML model may be trained using training data and then the trained ML model may be used to make predictions on new data. The process of training an ML model can be seen as a learning process where the ML model is exposed to new, unfamiliar data step by step. At each step, the ML model makes predictions and gets feedback about how accurate its generated predictions were. This feedback, which is provided in terms of an error according to some measure (for example distance from the correct solution), is used to correct the errors made in prediction.

As shown in FIG. 2, the computing device 110 may execute a machine learning (ML) model 117, which in the example of FIG. 2 may be a large language model (LLM). However, this is not a limitation and the ML model 117 may be any appropriate ML model. In addition, the ML model 117 is also shown in FIG. 2 as being executed on computing device 110 for example purposes only and may also be executed on any computing device 130 as a service or part of a service. The ML model 117 may perform functions relating to health care, telecommunications, manufacturing, and autonomous vehicles among others.

The ML model 117 may comprise layers 118A-118D. Each layer 118 may include logic that receives weighted input (e.g., via matrix multiplication between input data and weights), transforms it with an activation function and outputs a non-linear transformation of the input data. The weights are the real values that are attached to each input (i.e., feature) and they convey the importance of that corresponding feature in generating the output. An activation function may comprise a set of functions (which can include non-linear and linear functions). The output of a layer 118 is passed as input to the next layer 118. The output of the final layer (layer 118D in this case) is often referred to as the prediction.

Each layer 118 may include one or more attention modules (not shown) that each compute the relationship between different words in an input sequence. Each attention module may comprise an attention head and a feed forward network. While processing a word, an attention head enables the ML model 117 to focus on other words in the input sequence that are closely related to that word. The ML model 117 uses the attention head to relate every word in the input sequence to every other word in the input sequence. The feed forward network of each attention module may forward the output of its corresponding attention head to the attention head of the next attention module.

As discussed herein, the ML model 117 may continue to experience rapid growth in terms of size and complexity as it continues to evolve and learn through interactions during deployment. This in turn affects the memory and processing resources required for various layers 118 of the ML model 117. As discussed in further detail herein,

The automation controller 114 may obtain benchmarking information for each layer 118 of the ML model 117 on a regular basis. More specifically, the automation controller 114 may interface with computing device 110 (e.g., by polling processing device 115 and polling the memory 120) to obtain the benchmarking information for each layer 118. The benchmarking information for each layer 118 may include layer size (e.g., X MBs) and CPU usage (e.g., X% of available compute capability of the processing device 115) of the layer 118. It should be noted that CPU usage as used herein refers to usage of the processing device 115. The memory 120 may store each layer 118 of the ML model 117 individually and the processing device 115 may map its usage on a per layer 118 basis, allowing the automation controller 114 to obtain the benchmarking information for each layer 118.

The automation controller 114 may also obtain a set of predefined operating thresholds 119 for the ML model 117 from the memory 120. The set of predefined operating thresholds 119 may comprise a maximum layer size (since if a single layer 118 is too large, this may slow the response time of the ML model 117) and a maximum CPU usage (since if a single layer 118 uses too much of the processing device 115's compute capability, this may affect the performance of the other layers 118) that each layer 118 must adhere to. It should be noted that the set of predefined operating thresholds 119 for the ML model 117 will vary based on the device the ML model 117 is executing on. For example, if the ML model 117 is executing on a device with larger memory capacity and higher CPU capabilities, its maximum layer size and maximum CPU usage per layer will be larger than they would be if the ML model 117 was executing on a device with smaller memory capacity and lower CPU capabilities.

The automation controller 114 may also obtain contextual information of the computing device 110 on a regular basis. Contextual information of the computing device 110 may include current tasks (e.g., natural language processing tasks) being handled by the ML model 117, current hardware status of the computing device 110 (including current overall CPU usage and current overall memory usage), and ideal hardware status of the computing device 110 (including ideal overall CPU usage and ideal overall memory usage) for optimal execution of the ML model 117. The automation controller 114 may interface with computing device 110 (e.g., by polling processing device 115 and polling the memory 120) to obtain the contextual information. In some embodiments, the host OS 210 may run a resource monitor program which may track the benchmarking information for each layer 118 and the contextual information and provide this information to the automation controller 114 on any appropriate basis (e.g., at regular intervals).

Based on the benchmarking information for each layer, the set of predefined operating thresholds 119 and the contextual information, the automation controller 114 may determine whether any layers 118 require modification to prevent the ML model 117 from suffering from degradation of performance. The ML model 117 may suffer from performance degradation when certain layers 118 in violation of the set of predefined operating thresholds and/or because the contextual information indicates that the current hardware status of the computing device 110 is not within a minimum threshold of the ideal hardware status of the computing device 110 for optimal execution of the ML model 117. For example, there may be a significant difference between the current hardware status and the ideal hardware status of the computing device 110 (e.g., the current hardware status is below the ideal hardware status), with significant memory/processing resources of the computing device 110 available. Thus, a particular layer 118 that has relatively low memory consumption and CPU usage such that it is significantly far from the maximum layer size and the maximum CPU usage defined by the set of predefined thresholds 119 may need to be modified (e.g., expanded) so that it can operate more efficiently and the current hardware status of the computing device 110 is brought within the minimum threshold of the ideal hardware status of the computing device 110 for optimal execution of the ML model 117. In another example, each layer 118 may technically be in compliance with the set of predefined operating thresholds 119 but may be at or near the predefined thresholds such that the computing device 110 is operating well beyond the ideal hardware status for optimal execution of the ML model 117. The automation controller 114 may continuously obtain updated benchmarking information for each layer 118 and updated contextual information, and determine whether any layers 118 require modification at regular intervals.

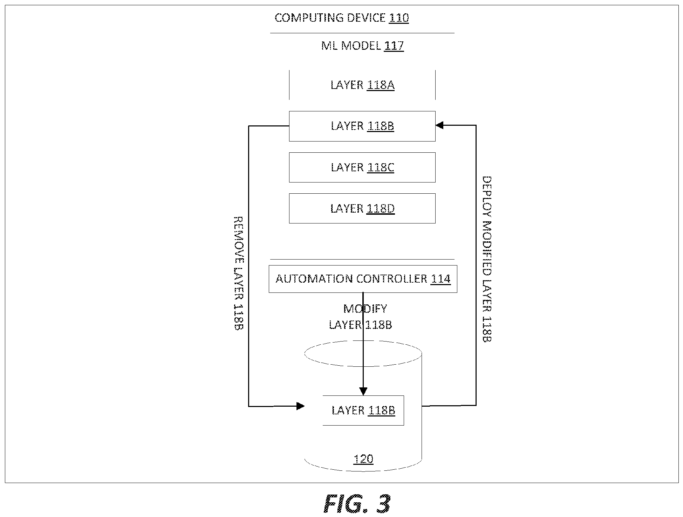

In response to determining that any layers 118 require modification, the automation controller 114 may modify those particular layers 118 such that those particular layers 118 are within the set of predefined operating thresholds 119 and/or the current hardware status of the computing device 110 is within the minimum threshold of the ideal hardware status. FIG. 3 illustrates the process of modifying a layer 118 of the ML model 117 in more detail. In the example of FIG. 3, layer 118B has been identified by the automation controller 114 as requiring modification. As shown in FIG. 3, the automation controller 114 may remove layer 118B from the ML model 117 and may deploy a playbook comprising a set of rules for modifying the layer 118B. It should be noted that the playbook and associated set of rules for modifying layers of the ML model 117 will vary based on the device the ML model 117 is executing on. For example, if the ML model 117 is executing on a device with larger memory capacity and higher CPU capabilities, the rules for how a layer 118 will be modified will be different than they would be if the ML model 117 was executing on a device with smaller memory capacity and lower CPU capabilities. FIG. 3 illustrates the memory 120 where the underlying data corresponding to each layer 118 may be stored. The automation controller 114 may modify the underlying data corresponding to layer 118B (referred to herein as modifying the layer 118B) in accordance with the set of rules as discussed in further detail herein.

To modify the layer 118B, the automation controller 114 may reduce or expand the layer 118B, modify the weighting of the layer 118B, and/or modify the activation function of the layer 118B based on the benchmarking information for each layer 118, the set of predefined operating thresholds 119 and the contextual information, in accordance with the set of rules.

Reducing the size of the layer 118B may serve to reduce both its memory consumption and its CPU usage. To reduce the size of the layer 118B, the automation controller 114 may remove or modify one or more attention modules from the layer 118B in accordance with the set of rules. For example, the automation controller 114 may identify any appropriate number of attention modules that contribute the most to the CPU usage and/or the memory usage of the layer 118B and remove those from the layer 118. In another example, the processing device 115 may determine each attention module's (of layer 118B) contribution to reducing the ML model 117's loss during training and provide this information to the automation controller 114. In response to determining that the size of layer 118B must be reduced, the automation controller 114 may use the information to identify any appropriate number of attention modules that contributed the least to reducing the ML model 117's loss and remove them. Removing attention modules in any of the ways discussed above may reduce the complexity and size of the ML model 117 (which in turn makes the process of retraining the ML model 117 easier).

In some embodiments, instead of removing a particular number of attention modules identified as discussed above, the automation controller 114 may lower the weights applied to certain identified attention modules. In other embodiments, the automation controller 114 may remove only the attention heads from certain identified attention modules. In other embodiments, in addition to or as an alternative to removing or modifying particular attention modules, the automation controller 114 may reduce the size of the layer 118B by reducing the bit precision of the values (e.g., input data) that the layer 118B is operating on. In this way, the computational overhead required to perform calculations on such values is reduced although the accuracy of such calculations will be reduced as well.

Increasing the size of the layer 118B may serve to increase both its memory consumption and its CPU usage. To increase the size of the layer 118B, the automation controller 114 may allocate additional memory and/or processing resources to the layer 118B, and also increase the size limit of the layer 118B defined by the set of predefined operating thresholds 119. In some embodiments, in addition to or as an alternative to allocating additional memory and/or processing resources, the automation controller 114 may increase the size of the layer 118B by increasing the bit precision of the values (e.g., input data) that the layer 118B is operating on. In this way, the computational overhead required to perform calculations on such values is increased and as a result, the accuracy of such calculations is increased.

The automation controller 114 may also decrease or increase the weighting applied to the input to the layer 118B in order to decrease or increase respectively the memory and processing resources used by the layer 118B.

The automation controller 114 may also modify the activation function(s) of the layer 118B. For example, the automation controller 114 may increase or decrease the frequency at which one or more of the activation functions of the layer 118B execute, may combine one or more of the activation functions of the layer 118B or modify the parameterization of one or more of the activation functions of the layer 118B. In some embodiments, the automation controller 114 may decide to use a different activation function(s) from the ones currently being utilizies. For example, while sigmoid or tanh are commonly used, the automation controller 114 may decide to use a simpler function like ReLU or leaky ReLU which are mathematically simpler and require less computational overhead. In other embodiments, the automation controller 114 may reduce the bit precision of the values (e.g., input data) that the layer 118B is operating on, resulting in a reduction of the precision of the activation function(s). In still other embodiments, the automation controller 114 may utilize the activation function(s) of the layer 118B in a sparse manner, meaning that only a small number of neurons are activated while the activation function(s) operates on the values (e.g., input data) that the layer 118B is operating on. The sparsity of neurons means less total computational overhead for the layer 118B.

The action or combination of actions the automation controller 114 takes to modify the layer 118B may be based on accuracy of the output of the ML model 117, time taken by the ML model 117 to generate the output and memory and CPU usage constraints on the computing device 110 (indicated by the current hardware status from the context information). For example, if the automation controller 114 determines that the outputs of the ML model 117 is off (e.g., based on test cases for what an accurate result/return value should be), the automation controller 114 (based on the set of rules) may adjust the weighting of the layer 118B to improve the accuracy. In another example, the automation controller 114 may determine that the computing device 110 has a critical shortage of memory and/or CPU availability. Thus, the automation controller 114 (based on the set of rules) may reduce the layer 118B as layer size/complexity has a direct correlation to compute resources like RAM, memory storage and CPU availability. If the automation controller 114 determines that the computing device 110 only has a shortage of CPU availability, it may (based on the set of rules) modify (e.g., lower) the frequency at which an activation function(s) of the layer 118B executes. This is because the frequency at which an activation function(s) executes has a direct correlation with the CPU usage of the corresponding layer 118 (i.e., the more frequently the activation function(s) execute the larger the cost in CPU availability). Introducing a delay or gap between activation enablement can provide significant savings with respect to CPU availability.

In the example of FIG. 3, the automation controller 114 determines that the layer 118B is in violation of the set of predefined operating thresholds 119, and in particular has exceeded the maximum layer size specified by the set of predefined operating thresholds 119 and to a larger extent has exceeded the maximum CPU usage threshold specified by the set of predefined operating thresholds 119. In accordance with the set of rules, the automation controller 114 may reduce the size of the layer 118B by removing 3 attention modules from the layer 118B. Because the layer 118B exceeded the maximum CPU usage to a larger extent, the automation controller 114 (based on the set of rules) may also reduce the bit precision of the values (e.g., input data) that the layer 118B is operating on to alleviate the additional excess CPU usage. Once the layer 118B has been modified, the automation controller 114 may deploy the modified layer 118B back to the ML model 117.

By continuously monitoring the benchmarking information for each layer 118 and the contextual information, determining whether any layers 118 require modification and modifying such layers 118, embodiments of the present disclosure provide a real time feedback loop that dynamically modifies/redeploys layers 118 to prevent excessive growth and performance issues that could hinder accuracy and operational efficiency of the ML model 117.

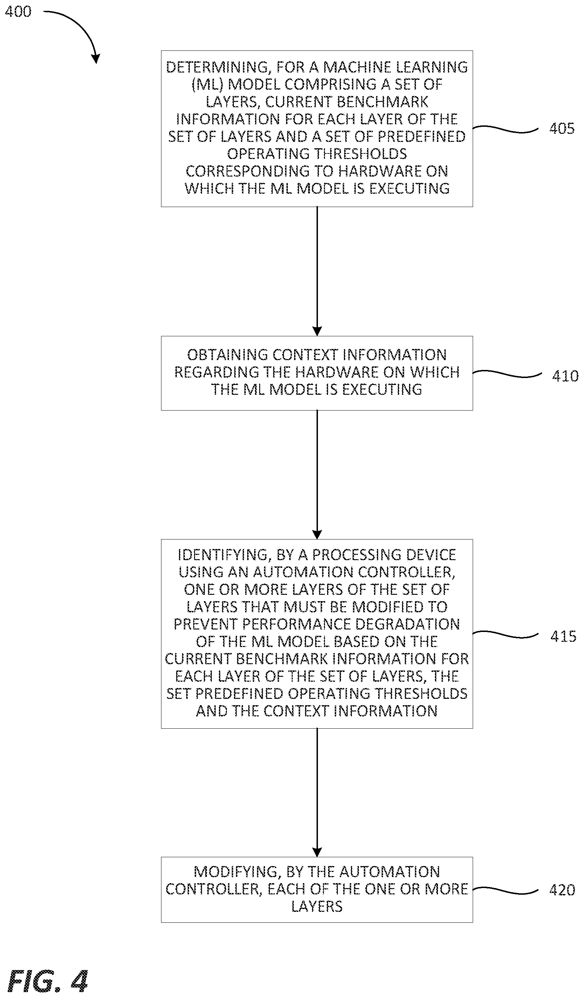

FIG. 4 is a flow diagram of a method 400 for dynamically reprovisioning layers of an ML model, in accordance with some embodiments of the present disclosure. Method 400 may be performed by processing logic that may comprise hardware (e.g., circuitry, dedicated logic, programmable logic, a processor, a processing device, a central processing unit (CPU), a system-on-chip (SoC), etc.), software (e.g., instructions running/executing on a processing device), firmware (e.g., microcode), or a combination thereof. In some embodiments, the method 400 may be performed by a computing device (e.g., computing device 110 illustrated in FIGS. 1-3).

Referring also to FIGS. 2 and 3, at block 405 the automation controller 114 may obtain benchmarking information for each layer 118 of the ML model 117 on a regular basis. More specifically, the automation controller 114 may interface with computing device 110 (e.g., by polling processing device 115 and polling the memory 120) to obtain the benchmarking information for each layer 118. The benchmarking information for each layer 118 may include layer size (e.g., X MBs) and CPU usage (e.g., X% of available compute capability of the processing device 115) of the layer 118. The automation controller 114 may also obtain a set of predefined operating thresholds 119 for the ML model 117 from the memory 120. The set of predefined operating thresholds 119 may comprise a maximum layer size (since if a single layer 118 is too large, this may slow the response time of the ML model 117) and a maximum CPU usage (since if a single layer 118 uses too much of the processing device 115's compute capability, this may affect the performance of the other layers 118) that each layer 118 must adhere to. It should be noted that the set of predefined operating thresholds 119 for the ML model 117 will vary based on the device the ML model 117 is executing on. At block 410, as shown in FIG. 3, when a new task 119 is received by the manager node 110, the manager node 110 may put the new task into the gETQ 118 and may assess the new task's priority and the status of all computing devices 130 (based on the most recently received device metrics of each computing device 130). More specifically, the manager node 110 may compare the task profile of the new task 119 and the assessed priority of the new task 119 with the device metrics of each the computing devices 130 to determine the optimal computing device 130 to assign the new task to.

At block 410, the automation controller 114 may also obtain contextual information of the computing device 110 on a regular basis. Contextual information of the computing device 110 may include current tasks (e.g., natural language processing tasks) being handled by the ML model 117, current hardware status of the computing device 110 (including current overall CPU usage and current overall memory usage), and ideal hardware status of the computing device 110 (including ideal overall CPU usage and ideal overall memory usage) for optimal execution of the ML model 117.

At block 415, based on the benchmarking information for each layer, the set of predefined operating thresholds 119 and the contextual information, the automation controller 114 may determine whether any layers 118 require modification to prevent the ML model 117 from suffering from degradation of performance. The ML model 117 may suffer from performance degradation when certain layers 118 in violation of the set of predefined operating thresholds and/or because the contextual information indicates that the current hardware status of the computing device 110 is not within a minimum threshold of the ideal hardware status of the computing device 110 for optimal execution of the ML model 117.

In response to determining that any layers 118 require modification, ay block 420 the automation controller 114 may modify those particular layers 118 such that those particular layers 118 are within the set of predefined operating thresholds 119 and/or the current hardware status of the computing device 110 is within the minimum threshold of the ideal hardware status. In the example of FIG. 3, layer 118B has been identified by the automation controller 114 as requiring modification. As shown in FIG. 3, the automation controller 114 may remove layer 118B from the ML model 117 and may deploy a playbook comprising a set of rules for modifying the layer 118B. It should be noted that the playbook and associated set of rules for modifying layers of the ML model 117 will vary based on the device the ML model 117 is executing on. For example, if the ML model 117 is executing on a device with larger memory capacity and higher CPU capabilities, the rules for how a layer 118 will be modified will be different than they would be if the ML model 117 was executing on a device with smaller memory capacity and lower CPU capabilities. FIG. 3 illustrates the memory 120 where the underlying data corresponding to each layer 118 may be stored. The automation controller 114 may modify the underlying data corresponding to layer 118B (referred to herein as modifying the layer 118B) in accordance with the set of rules as discussed in further detail herein.

To modify the layer 118B, the automation controller 114 may reduce or expand the layer 118B, modify the weighting of the layer 118B, and/or modify the activation function of the layer 118B based on the benchmarking information for each layer 118, the set of predefined operating thresholds 119 and the contextual information, in accordance with the set of rules. The action or combination of actions the automation controller 114 takes to modify the layer 118B may be based on accuracy of the output of the ML model 117, time taken by the ML model 117 to generate the output and memory and CPU usage constraints on the computing device 110 (indicated by the current hardware status from the context information). For example, if the automation controller 114 determines that the outputs of the ML model 117 is off (e.g., based on test cases for what an accurate result/return value should be), the automation controller 114 (based on the set of rules) may adjust the weighting of the layer 118B to improve the accuracy. In another example, the automation controller 114 may determine that the computing device 110 has a critical shortage of memory and/or CPU availability. Thus, the automation controller 114 (based on the set of rules) may reduce the layer 118B as layer size/complexity has a direct correlation to compute resources like RAM, memory storage and CPU availability. If the automation controller 114 determines that the computing device 110 only has a shortage of CPU availability, it may (based on the set of rules) modify (e.g., lower) the frequency at which an activation function(s) of the layer 118B executes. This is because the frequency at which an activation function(s) executes has a direct correlation with the CPU usage of the corresponding layer 118 (i.e., the more frequently the activation function(s) execute the larger the cost in CPU availability). Introducing a delay or gap between activation enablement can provide significant savings with respect to CPU availability.

By continuously monitoring the benchmarking information for each layer 118 and the contextual information, determining whether any layers 118 require modification and modifying such layers 118, embodiments of the present disclosure provide a real time feedback loop that dynamically modifies/redeploys layers 118 to prevent excessive growth and performance issues that could hinder accuracy and operational efficiency of the ML model 117.

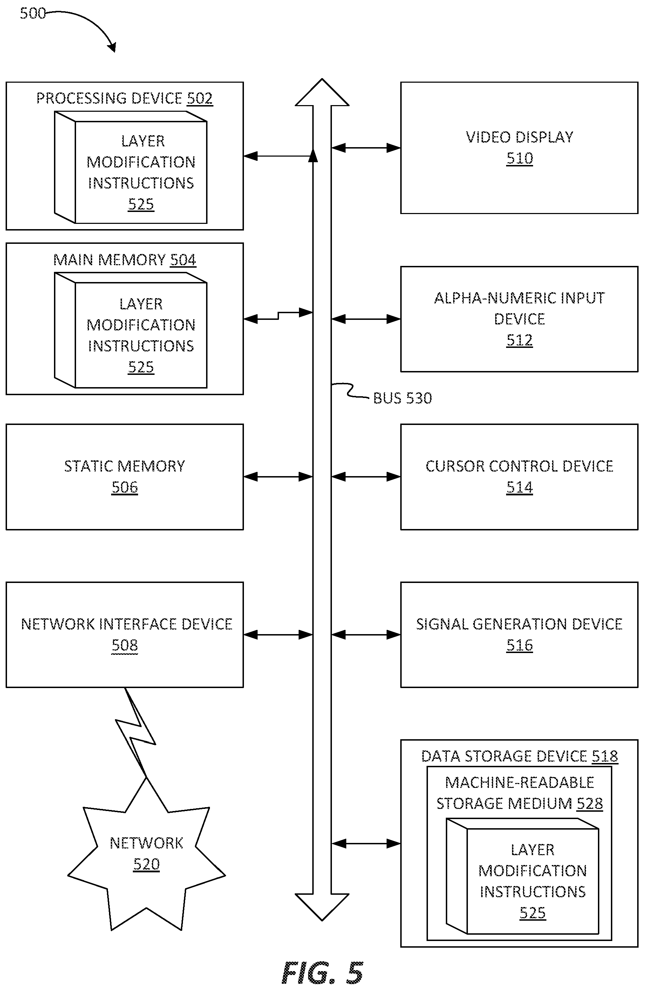

FIG. 5 illustrates a diagrammatic representation of a machine in the example form of a computer system 500 within which a set of instructions, for causing the machine to perform any one or more of the methodologies discussed herein for dynamically reprovisioning layers of an ML model, in accordance with some embodiments of the present disclosure.

In alternative embodiments, the machine may be connected (e.g., networked) to other machines in a local area network (LAN), an intranet, an extranet, or the Internet. The machine may operate in the capacity of a server or a client machine in a client-server network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a server, a network router, a switch or bridge, a hub, an access point, a network access control device, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein. In one embodiment, computer system 500 may be representative of a server.

The exemplary computer system 500 includes a processing device 502, a main memory 504 (e.g., read-only memory (ROM), flash memory, dynamic random access memory (DRAM), a static memory 506 (e.g., flash memory, static random access memory (SRAM), etc.), and a data storage device 518, which communicate with each other via a bus 530. Any of the signals provided over various buses described herein may be time multiplexed with other signals and provided over one or more common buses. Additionally, the interconnection between circuit components or blocks may be shown as buses or as single signal lines. Each of the buses may alternatively be one or more single signal lines and each of the single signal lines may alternatively be buses.

Computing device 500 may further include a network interface device 508 which may communicate with a network 520. The computing device 500 also may include a video display unit 510 (e.g., a liquid crystal display (LCD) or a cathode ray tube (CRT)), an alphanumeric input device 512 (e.g., a keyboard), a cursor control device 514 (e.g., a mouse) and an acoustic signal generation device 516 (e.g., a speaker). In one embodiment, video display unit 510, alphanumeric input device 512, and cursor control device 514 may be combined into a single component or device (e.g., an LCD touch screen).

Processing device 502 represents one or more general-purpose processing devices such as a microprocessor, central processing unit, or the like. More particularly, the processing device may be complex instruction set computing (CISC) microprocessor, reduced instruction set computer (RISC) microprocessor, very long instruction word (VLIW) microprocessor, or processor implementing other instruction sets, or processors implementing a combination of instruction sets. Processing device 502 may also be one or more special-purpose processing devices such as an application specific integrated circuit (ASIC), a field programmable gate array (FPGA), a digital signal processor (DSP), network processor, or the like. The processing device 502 is configured to execute layer modification instructions 525, for performing the operations and steps discussed herein.

The data storage device 518 may include a machine-readable storage medium 528, on which is stored one or more sets of layer modification instructions 525 (e.g., software) embodying any one or more of the methodologies of functions described herein. The layer modification instructions 525 may also reside, completely or at least partially, within the main memory 504 or within the processing device 502 during execution thereof by the computer system 500; the main memory 504 and the processing device 502 also constituting machine-readable storage media. The layer modification instructions 525 may further be transmitted or received over a network 520 via the network interface device 508.

The machine-readable storage medium 528 may also be used to store instructions to perform a method for assigning tasks using an automation controller. While the machine-readable storage medium 528 is shown in an exemplary embodiment to be a single medium, the term "machine-readable storage medium" should be taken to include a single medium or multiple media (e.g., a centralized or distributed database, or associated caches and servers) that store the one or more sets of instructions. A machine-readable medium includes any mechanism for storing information in a form (e.g., software, processing application) readable by a machine (e.g., a computer). The machine-readable medium may include, but is not limited to, magnetic storage medium (e.g., floppy diskette); optical storage medium (e.g., CD-ROM); magneto-optical storage medium; read-only memory (ROM); random-access memory (RAM); erasable programmable memory (e.g., EPROM and EEPROM); flash memory; or another type of medium suitable for storing electronic instructions.

Unless specifically stated otherwise, terms such as "determining," "obtaining," "identifying," "deploying," "modifying" or the like, refer to actions and processes performed or implemented by computing devices that manipulates and transforms data represented as physical (electronic) quantities within the computing device's registers and memories into other data similarly represented as physical quantities within the computing device memories or registers or other such information storage, transmission or display devices. Also, the terms "first," "second," "third," "fourth," etc., as used herein are meant as labels to distinguish among different elements and may not necessarily have an ordinal meaning according to their numerical designation.

Examples described herein also relate to an apparatus for performing the operations described herein. This apparatus may be specially constructed for the required purposes, or it may comprise a general purpose computing device selectively programmed by a computer program stored in the computing device. Such a computer program may be stored in a computer-readable non-transitory storage medium.

The methods and illustrative examples described herein are not inherently related to any particular computer or other apparatus. Various general purpose systems may be used in accordance with the teachings described herein, or it may prove convenient to construct more specialized apparatus to perform the required method steps. The required structure for a variety of these systems will appear as set forth in the description above.

The above description is intended to be illustrative, and not restrictive. Although the present disclosure has been described with references to specific illustrative examples, it will be recognized that the present disclosure is not limited to the examples described. The scope of the disclosure should be determined with reference to the following claims, along with the full scope of equivalents to which the claims are entitled.

As used herein, the singular forms "a", "an" and "the" are intended to include the plural forms as well, unless the context clearly indicates otherwise. It will be further understood that the terms "comprises", "comprising", "includes", and/or "including", when used herein, specify the presence of stated features, integers, steps, operations, elements, and/or components, but do not preclude the presence or addition of one or more other features, integers, steps, operations, elements, components, and/or groups thereof. Therefore, the terminology used herein is for the purpose of describing particular embodiments only and is not intended to be limiting.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Although the method operations were described in a specific order, it should be understood that other operations may be performed in between described operations, described operations may be adjusted so that they occur at slightly different times or the described operations may be distributed in a system which allows the occurrence of the processing operations at various intervals associated with the processing.

Various units, circuits, or other components may be described or claimed as "configured to" or "configurable to" perform a task or tasks. In such contexts, the phrase "configured to" or "configurable to" is used to connote structure by indicating that the units/circuits/components include structure (e.g., circuitry) that performs the task or tasks during operation. As such, the unit/circuit/component can be said to be configured to perform the task, or configurable to perform the task, even when the specified unit/circuit/component is not currently operational (e.g., is not on). The units/circuits/components used with the "configured to" or "configurable to" language include hardware--for example, circuits, memory storing program instructions executable to implement the operation, etc. Reciting that a unit/circuit/component is "configured to" perform one or more tasks, or is "configurable to" perform one or more tasks, is expressly intended not to invoke 35 U.S.C. 112, sixth paragraph, for that unit/circuit/component. Additionally, "configured to" or "configurable to" can include generic structure (e.g., generic circuitry) that is manipulated by software and/or firmware (e.g., an FPGA or a general-purpose processor executing software) to operate in manner that is capable of performing the task(s) at issue. "Configured to" may also include adapting a manufacturing process (e.g., a semiconductor fabrication facility) to fabricate devices (e.g., integrated circuits) that are adapted to implement or perform one or more tasks. "Configurable to" is expressly intended not to apply to blank media, an unprogrammed processor or unprogrammed generic computer, or an unprogrammed programmable logic device, programmable gate array, or other unprogrammed device, unless accompanied by programmed media that confers the ability to the unprogrammed device to be configured to perform the disclosed function(s).

The foregoing description, for the purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the embodiments and its practical applications, to thereby enable others skilled in the art to best utilize the embodiments and various modifications as may be suited to the particular use contemplated. Accordingly, the present embodiments are to be considered as illustrative and not restrictive, and the invention is not to be limited to the details given herein, but may be modified within the scope and equivalents of the appended claims.

## Claims

1. A method comprising:
determining, for a machine learning (ML) model comprising a set of layers, current benchmark information for each layer of the set of layers and a set of predefined operating thresholds corresponding to hardware on which the ML model is executing;
obtaining context information regarding the hardware on which the ML model is executing;
identifying, by a processing device using an automation controller, one or more layers of the set of layers that must be modified to prevent performance degradation of the ML model based on the current benchmark information for each layer of the set of layers, the set of predefined operating thresholds and the context information; and
modifying, by the automation controller, each of the one or more layers.

2. The method of claim 1, wherein the context information comprises:
processing tasks currently assigned to the ML model;
a current status of the hardware; and
an ideal status of the hardware for optimal execution of the ML model.

3. The method of claim 1, wherein modifying a layer of the one or more layers comprises one or more of:
expanding or reducing a size of the layer;
tuning a weighting of the layer; or
modifying an activation function of the layer.

4. The method of claim 2, wherein the automation controller comprises a set of rules associated with the hardware on which the ML model is executing, and wherein modifying each of the one or more layers comprises:
modifying the layer based on the set of rules so that the layer does not exceed any of the predefined operating thresholds; or
modifying the layer based on the set of rules so that the current status of the hardware on which the ML model is executing is within a threshold of the ideal status of the hardware for optimal execution of the ML model.

5. The method of claim 3, further comprising:
removing the layer from the ML model; and
deploying the layer back to the ML model after the layer has been modified.

6. The method of claim 3, wherein reducing the size of the layer comprises one or more of:
removing one or more attention modules of the layer;
removing an attention head of each of the one or more attention modules of the layer; or
modifying a bit precision of data operated on by the layer.

7. The method of claim 1, wherein the current benchmark information for each layer of the set of layers comprises:
a maximum layer size; and
a maximum usage of the processing device.

8. A system comprising:
a memory; and
a processing device operatively coupled to the memory, the processing device configured to:
determine, for a machine learning (ML) model comprising a set of layers, current benchmark information for each layer of the set of layers and a set of predefined operating thresholds corresponding to hardware on which the ML model is executing;
obtain context information regarding the hardware on which the ML model is executing;
identify, using an automation controller, one or more layers of the set of layers that must be modified to prevent performance degradation of the ML model based on the current benchmark information for each layer of the set of layers, the set of predefined operating thresholds and the context information; and
modify, by the automation controller, each of the one or more layers.

9. The system of claim 8, wherein the context information comprises:
processing tasks currently assigned to the ML model;
a current status of the hardware; and
an ideal status of the hardware for optimal execution of the ML model.

10. The system of claim 8, wherein to modify a layer of the one or more layers, the processing device is to perform one or more of:
expanding or reducing a size of the layer;
tuning a weighting of the layer; or
modifying an activation function of the layer.

11. The system of claim 9, wherein the automation controller comprises a set of rules associated with the hardware on which the ML model is executing, and wherein to modify each of the one or more layers, the processing device is configured to:
modify the layer based on the set of rules so that the layer does not exceed any of the predefined operating thresholds; or
modify the layer based on the set of rules so that the current status of the hardware on which the ML model is executing is within a threshold of the ideal status of the hardware for optimal execution of the ML model.

12. The system of claim 10, wherein the processing device is further to:
remove the layer from the ML model; and
deploy the layer back to the ML model after the layer has been modified.

13. The system of claim 10, wherein to reduce the size of the layer, the processing device is to perform or more of:
removing one or more attention modules of the layer;
removing an attention head of each of the one or more attention modules of the layer; or
modifying a bit precision of data operated on by the layer.

14. The system of claim 8, wherein the current benchmark information for each layer of the set of layers comprises:
a maximum layer size; and
a maximum usage of the processing device.

15. A non-transitory computer-readable medium having instructions stored thereon which, when executed by a processing device, cause the processing device to carry out the method of any of claims 1 to 7.
